# DEMANDE DE BREVET EUROPEEN

(11) **EP 1 780 875 A2**
(43) Date de publication de la demande: **02.05.2007**
(21) Numéro de dépôt: 06301088.8
(22) Date de dépôt: 25.10.2006
(51) Int. Cl.: H02K 11/00, H02K 29/08

(54) **Machine électrique à sondes à effet Hall**

(30) Priorité: 27.10.2005 FR 0553273
(71) Demandeur: MOTEURS LEROY-SOMER, 16000 Angouleme (FR)
(72) Inventeur: Makki, Ali, 69006 Lyon (FR); Lemeunier, Eric, 69360 Saint Symphorien d'Ozon (FR)
(74) Mandataire: Tanty, François

(57) **Abrégé**

La présente invention concerne une machine électrique tournante polyphasée (1) comportant :
- un rotor (3),
- un stator (2) ayant une pluralité de phases disposées circonférentiellement avec un premier écart angulaire entre deux phases,
- une pluralité de capteurs magnétiques, notamment de sondes à effet Hall, associés au stator, au moins deux capteurs adjacents étant espacés angulairement d'un deuxième intervalle angulaire supérieur ou égal au premier,
- un dispositif magnétique associé au rotor, comportant autant de pôles que ce dernier et interagissant magnétiquement avec les capteurs magnétiques.

## Description

La présente invention concerne les machines électriques tournantes.

Le brevet US 6 683 397 divulgue une machine comportant un rotor à aimants permanents et un stator comportant trois sondes à effet Hall pour détecter la rotation du rotor.

Dans un exemple de mise en oeuvre divulgué dans ce brevet, les sondes à effet Hall sont fixées sur les dents du stator et sont engagées à l'intérieur des bobines du stator.

Une telle disposition a pour inconvénient que les sondes à effet Hall sont exposées à la chaleur dégagée par les bobines lors du fonctionnement de la machine, ce qui peut limiter la température de fonctionnement de celle-ci à une valeur inférieure à celle que pourrait supporter la machine en l'absence des sondes à effet Hall.

Par ailleurs, les sondes sont disposées sur trois dents consécutives du stator. En fonction de la polarité de la machine, l'intervalle angulaire entre deux dents consécutives peut être relativement faible, étant par exemple de 360/(3xp) pour une machine triphasée, p étant le nombre de paires de pôles. Ainsi, dans le cas d'une machine à douze pôles, l'écart angulaire est de 20° seulement. Un écartement faible peut compliquer la mise en place des sondes.

Le brevet US 6 025 665 divulgue une machine comportant trois sondes à effet Hall disposées sur un support comportant trois logements correspondants.

La demande de brevet japonais 07-107707 divulgue une machine électrique comportant trois sondes à effet Hall disposées sur les dents du stator.

Le brevet US 5 864 192 divulgue une machine triphasée à quatre pôles comportant des sondes à effet Hall disposées sur un circuit imprimé avec un intervalle angulaire de 52° entre elles.

La demande de brevet européen EP 1 010 660 A1 divulgue un moteur comportant trois sondes à effet Hall disposées avec un intervalle angulaire qui est le tiers de celui existant entre deux pôles du rotor.

Les demandes de brevet US 2004/066 166 et DE 103 33 092 décrivent des moteurs à reluctance variable, comportant un rotor à huit pôles et un dispositif magnétique associé au rotor comportant plus de huit pôles.

L'abrégé de la demande JP 07264822 décrit un moteur dont les bobinages du stator sont alimentés par deux circuits triphasés et qui comporte un système de détection comportant trois détecteurs magnétiques.

Il existe un besoin pour bénéficier d'une machine électrique de construction aisée, fiable et pouvant fonctionner à une température relativement élevée si nécessaire.

L'invention vise notamment à répondre à ce besoin.

L'invention a pour objet, selon l'un de ses aspects, une machine électrique tournante polyphasée comportant :
- un rotor,
- un stator ayant une pluralité de phases disposées circonférentiellement avec un premier écart angulaire entre deux phases,
- une pluralité de capteurs magnétiques, notamment de sondes à effet Hall, associés au stator, au moins deux capteurs adjacents étant espacés angulairement d'un deuxième intervalle angulaire, supérieur ou égal au premier.

Le deuxième intervalle angulaire peut être strictement supérieur au premier intervalle angulaire.

Une telle disposition des capteurs magnétiques facilite leur montage sur la machine.

La machine peut comporter un dispositif magnétique associé au rotor, interagissant magnétiquement avec les sondes à effet Hall. Ce dispositif magnétique peut comporter autant de pôles que le rotor.

Le dispositif magnétique peut comporter une roue polaire, laquelle peut être fixée sur une entretoise portée par l'arbre du rotor.

Le dispositif magnétique peut comporter au moins un repère matérialisant l'emplacement d'un pôle ou d'une frontière entre pôles. Le dispositif magnétique peut comporter autant de repères que de pôles.

Le rotor peut comporter quatre pôles, le premier écart angulaire étant sensiblement de 60° et le deuxième écart angulaire sensiblement de 120°.

Le rotor peut comporter six pôles, le premier écart angulaire étant sensiblement de 40° et le deuxième écart angulaire sensiblement de 40°.

Le rotor peut comporter huit pôles, le premier écart angulaire étant sensiblement de 30° et le deuxième écart angulaire étant sensiblement de 120°.

Le rotor peut comporter douze pôles, le premier écart angulaire étant sensiblement de 20° et le deuxième écart angulaire sensiblement de 40°.

Les sondes à effet Hall sont avantageusement disposées sur un support rapporté sur le stator.

De part leur montage sur un support rapporté sur le stator, les sondes ne sont pas exposées directement à la chaleur dégagée par les bobines du stator, ce qui peut permettre par exemple à ces dernières d'atteindre une température supérieure à 130 °C, par exemple comprise entre 130 °C et 155 °C.

De plus, les signaux émis par les sondes sont moins susceptibles d'être parasités par les flux de fuite des têtes de bobine du stator.

Le montage des sondes ne nécessite pas de réaliser un stator ayant des bobinages dissymétriques.

La fiabilité du fonctionnement de la machine est améliorée, indépendamment de sa taille.

Le support peut comporter des reliefs de positionnement des sondes à effet Hall, chaque relief permettant le positionnement d'une sonde dans une position angulaire prédéfinie sur le support, le nombre de positions angulaires prédéfinies étant supérieur au nombre de sondes.

Cela permet l'utilisation d'un même support sur des machines ayant des polarités différentes, ce qui assure une économie d'échelle.

Les reliefs peuvent être des logements, lesquels peuvent être formés en creux sur une surface radialement intérieure du support.

La machine peut comporter un circuit imprimé associé au support, présentant des pistes conductrices aboutissant à une pluralité de groupements de pastilles de connexion, chaque groupement comportant au moins autant de pastilles que la sonde à effet Hall comporte de pattes de raccordement au circuit imprimé, le nombre de groupements étant supérieur à celui des sondes, chaque groupement étant associé à un relief de positionnement des sondes sur le support.

Le rotor peut être à aimants permanents.

La machine peut être un moteur, celui-ci étant par exemple capable de fonctionner avec une température de bobinage supérieure à 130 °C.

L'invention a encore pour objet, selon un autre de ses aspects, une machine électrique tournante triphasée comportant :
- un rotor à aimants permanents,
- un stator ayant une pluralité de phases disposées circonférentiellement avec un premier écart angulaire entre deux phases,
- trois capteurs magnétiques respectivement associés aux trois phases U, V et W de la machine, notamment trois sondes à effet Hall, associés au stator, au moins deux capteurs adjacents étant espacés angulairement d'un deuxième intervalle angulaire supérieur ou égal au premier

L'invention vise encore, indépendamment ou en combinaison avec ce qui précède, à faciliter le montage de capteurs magnétiques, notamment de sondes à effet Hall ou de capteurs inductifs, sur une machine tournante électrique.

L'invention a ainsi pour objet, selon un autre de ses aspects, un dispositif de détection de la rotation du rotor d'une machine électrique tournante, comportant :
- au moins un dispositif magnétique associé au rotor,
- au moins un support associé au stator,
- une pluralité de capteurs magnétiques, notamment de sondes à effet Hall, pouvant être fixés sur le support,
le support comportant des reliefs permettant de positionner les capteurs magnétiques, chaque relief étant associé à une position angulaire prédéfinie sur le support, le nombre de positions angulaires prédéfinies étant supérieur au nombre de capteurs magnétiques.

Les reliefs peuvent comporter des logements dans lesquels peuvent être disposés les capteurs magnétiques.

Les reliefs peuvent être réalisés en creux sur une surface radialement intérieure du support.

Le nombre de positions angulaires prédéfinies peut être supérieur à 3, étant par exemple de 5.

L'écart angulaire entre les positions prédéfinies peut être de 40° ou 120°, dans le cas d'une machine triphasée.

Le dispositif peut comporter un circuit imprimé associé au support, présentant des pistes conductrices aboutissant à une pluralité de groupements de pastilles de connexion, chaque groupement comportant au moins autant de pastilles que le capteur magnétique comporte de pattes de raccordement au circuit imprimé, le nombre de groupements étant supérieur à celui des capteurs, chaque groupement étant associé à un relief de positionnement des capteurs sur le support.

La machine électrique peut être à deux pôles, les capteurs étant disposés sur le support avec un écart angulaire entre eux de sensiblement 120°.

Le rotor peut comporter quatre pôles, les capteurs étant disposés sur le support avec un écart angulaire entre eux de sensiblement 120°.

Le rotor peut comporter huit pôles, les capteurs étant disposés sur le support avec un écart angulaire entre eux de sensiblement 120°.

Le rotor peut comporter six pôles, les capteurs étant disposés sur le support avec un écart angulaire entre eux de sensiblement 40°.

Le rotor peut comporter douze pôles, les capteurs étant disposés sur le support avec un écart angulaire entre eux de sensiblement 40°.

Le dispositif magnétique peut comporter une roue polaire, laquelle peut être multipolaire, étant magnétisée radialement ou axialement.

Le dispositif peut comporter une entretoise agencée pour se fixer en bout d'arbre et recevant la roue polaire.

Le dispositif peut comporter un nombre de capteurs supérieur ou égal au nombre de phases d'alimentation de la machine.

L'invention pourra être mieux comprise à la lecture de la description détaillée qui va suivre et à l'examen du dessin annexé, sur lequel :
- la figure 1 représente de manière partielle et schématique, en perspective éclatée, une machine réalisée conformément à un exemple de mise en oeuvre de l'invention,
- la figure 2 est une coupe longitudinale, partielle et schématique, de la machine de la figure 1,
- la figure 3 représente isolément, en perspective, le support des sondes à effet Hall,
- la figure 4 représente isolément, en perspective, la roue polaire,
- la figure 5 est une vue de dessus de la roue polaire, et
- les figures 6 à 10 illustrent des exemples de positionnement des sondes pour différentes polarités d'une machine triphasée.

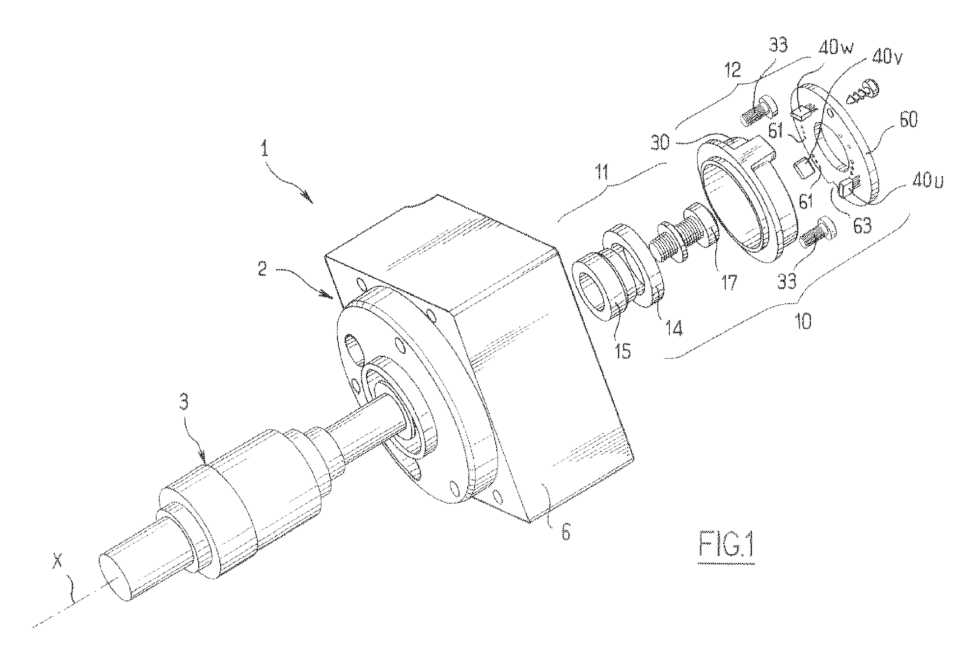

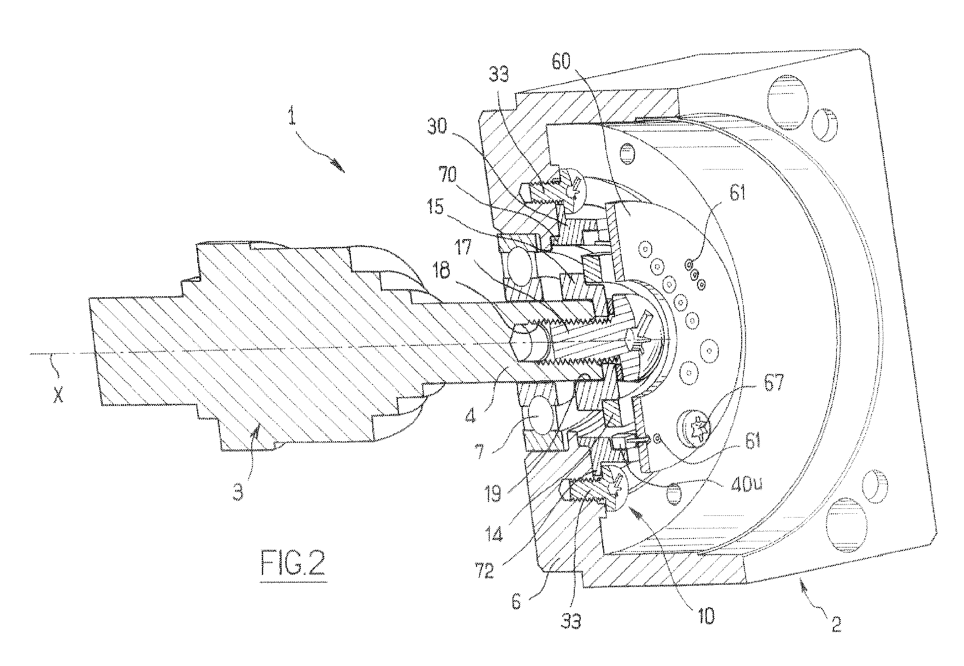

On a représenté schématiquement aux figures 1 et 2 une machine électrique 1, par exemple une machine synchrone à aimants permanents, par exemple un moteur.

La machine 1 comporte un stator 2 et un rotor 3, partiellement représentés.

Le rotor 3 comporte un arbre 4 tournant autour d'un axe longitudinal X.

Le stator 2 comporte au moins un flasque 6 logeant un roulement 7 supportant l'arbre 4.

La machine 1 est par exemple une machine triphasée et le rotor comporte par exemple 2, 4, 6, 8 ou 12 pôles.

Le stator 2 peut être à bobinage distribué ou à bobinage concentré.

La machine 1 comporte un détecteur de rotation 10 qui comporte d'une part un dispositif magnétique tournant 11 associé au rotor 4 et, d'autre part, un dispositif de détection 12 statique, associé au stator 2.

Dans l'exemple illustré, le dispositif magnétique tournant 11 comporte une roue polaire 14 qui est fixée sur l'arbre 4 par l'intermédiaire d'une entretoise 15, laquelle est par exemple retenue sur l'arbre 4 par une vis 17 engagée dans un logement 18 situé en bout d'arbre.

L'entretoise 15 comporte un logement 19 dans lequel est emmanchée l'extrémité de l'arbre 4 ayant traversé le roulement 7, l'arbre 4 venant axialement en appui contre le fond de ce logement 19.

L'entretoise 15 est épaulée extérieurement de façon à accueillir la roue polaire 14 qui est située axialement par exemple sensiblement au niveau de l'extrémité libre de l'arbre 4.

La roue polaire 14 est par exemple collée sur l'entretoise 15.

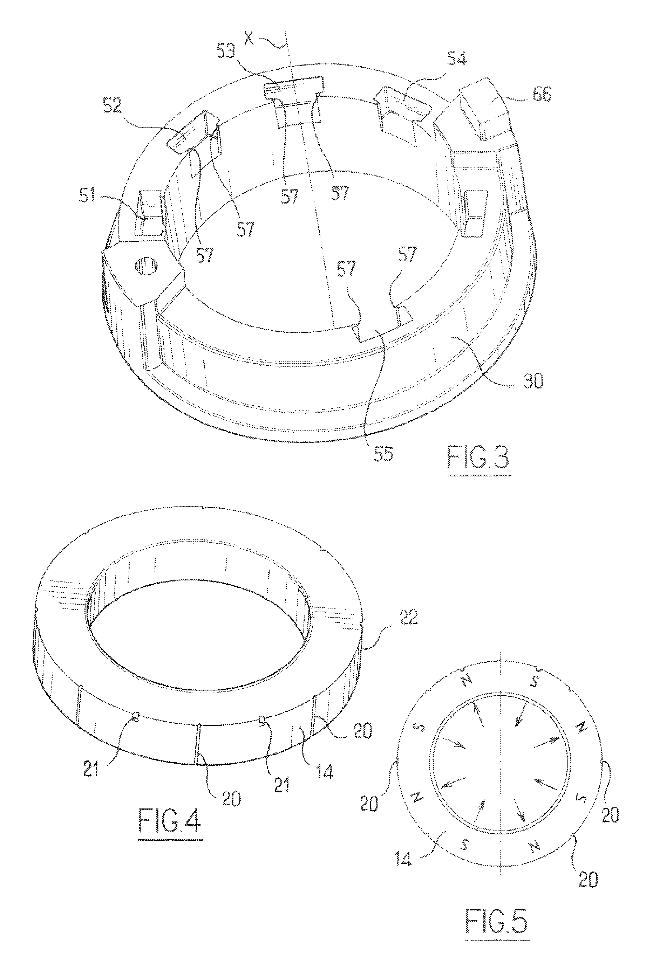

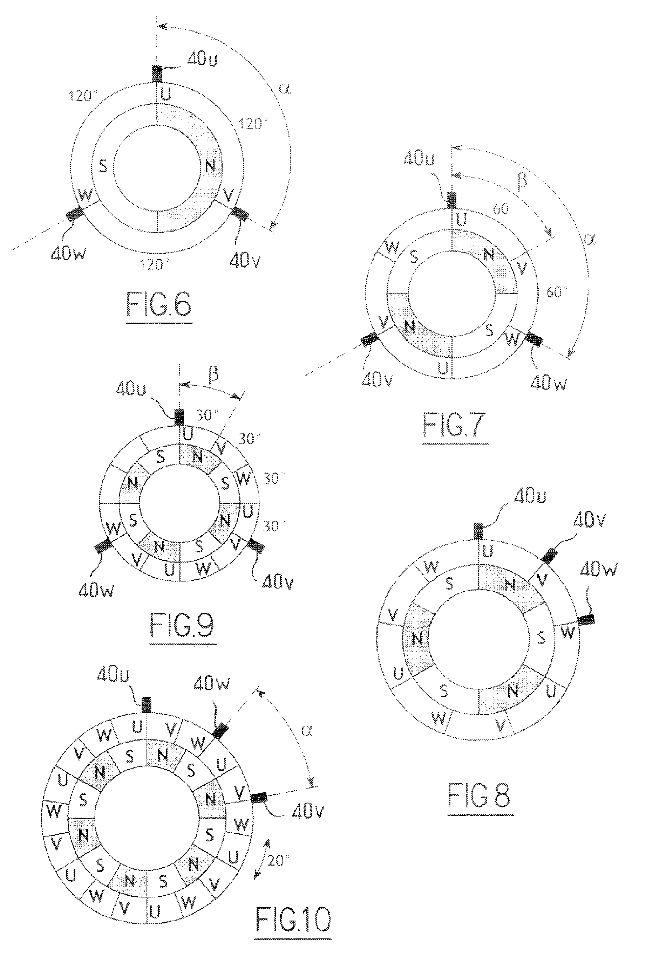

Dans l'exemple considéré, la roue polaire 14 comporte autant de pôles que le rotor 3, en l'espèce huit pôles dans l'exemple représenté aux figures 4 et 5.

La roue polaire 14 est par exemple réalisée en ferrite et présente une aimantation radiale, avec une alternance de pôles N et S dans le sens circonférentiel. La roue polaire 14 peut encore être réalisée avec de la ferrite, plasto-ferrite, en NdFeBr, plasto-NdFeBr ou SmCo.

La roue polaire 14 présente dans l'exemple considéré des repères 20 qui matérialisent la séparation des pôles ainsi que des détrompeurs 21 qui permettent de monter la roue polaire 14 sur l'entretoise 15 avec une orientation prédéfinie.

Les détrompeurs 21 sont par exemple des encoches débouchant sur une face axiale 22 de la roue polaire 14 et les repères 20 sont par exemple des rainures orientées axialement et s'étendant sur la face radialement extérieure de la roue polaire 14 entre les faces axiales.

Le dispositif de détection statique 12 comporte un support 30 solidaire du stator, étant par exemple fixé sur le flasque 6 de façon réglable angulairement, par exemple à l'aide de deux vis 33 diamétralement opposées, comme illustré à la figure 2.

Le support 30 comporte dans l'exemple considéré une nervure annulaire 70, d'axe X, qui est engagée dans le flasque 6 et qui permet de faire tourner le support 30 sur lui-même autour de l'axe X avant serrage des vis 33, lesquelles viennent appuyer lors du serrage sur une collerette périphérique 72 du support 30.

Dans l'exemple illustré, la machine étant triphasée, le dispositif de détection comporte trois sondes 40ᵤ, 40ᵥ et 40_{w} à effet Hall, respectivement associées aux phases U, V et W de la machine.

Les sondes 40ᵤ, 40ᵥ et 40_{w} sont exposées au champ magnétique de la roue polaire 14, laquelle tourne en face des sondes en étant séparée de celles-ci par un entrefer radial.

Le support 30 comporte des reliefs de positionnement des sondes, composés de logements 51 à 55 de forme adaptée à celle des sondes.

Le support est par exemple réalisé dans une matière plastique ou tout autre matériau non magnétique ou dans un métal magnétique ou non, feuilleté ou à forte résistivité ohmique pour éviter les pertes dues aux courants de Foucault.

Dans l'exemple considéré, ces logements 51 à 55 sont réalisés en creux sur la surface radialement intérieure du support, et comportent chacun deux nervures opposées 57, de retenue des sondes.

Les logements 51 à 54 sont disposés autour de l'axe X avec un écart angulaire de 40° entre eux et le logement 55 est disposé avec un écart angulaire de 120° par rapport à chacun des logements 51 et 54.

La présence des logements 51 à 55 en nombre supérieur à celui des sondes 40ᵤ, 40ᵥ et 40_{w} permet de positionner ces dernières selon une configuration adaptée à la polarité du rotor.

Par exemple, dans le cadre d'un rotor à deux pôles, les trois sondes peuvent être positionnées respectivement dans les logements 51, 54 et 55, ce qui correspond à un écart angulaire α de 120° entre deux sondes adjacentes, comme illustré figure 6.

Dans le cas d'un rotor à quatre pôles, les sondes 40ᵤ, 40ᵥ et 40_{w} peuvent être disposées à 120° les unes des autres comme illustré à la figure 7, alors que l'écart angulaire β entre les phases du stator est de 60°.

La figure 8 illustre le cas d'un rotor à six pôles, pour lequel l'écart angulaire α entre les sondes 40ᵤ, 40ᵥ et 40_{w} est de 40°, les sondes étant disposées dans les logements consécutifs 51 à 53 du support 30, par exemple.

Pour un rotor à huit pôles, comme illustré à la figure 9, les sondes 40ᵤ, 40ᵥ et 40_{w} peuvent être disposées à 120° les unes des autres alors que l'écart angulaire β entre les phases du stator est de 30°.

La figure 10 illustre le cas d'un rotor à douze pôles, pour lequel les sondes 40ᵤ, 40ᵥ et 40_{w} sont disposées avec un écart angulaire α de 40° entre elles, la sonde 40_{w} étant disposée entre les sondes 40ᵤ et 40ᵥ. L'écart angulaire β entre phases est de 20°.

Le dispositif de détection 12 comporte un circuit imprimé 60 qui est ajouré en son centre pour ménager un accès à la vis 17 et qui comporte des pistes conductrices aboutissant à des groupements de pastilles 61 destinés à recevoir les pattes de connexion des sondes.

Ces groupements 61 sont disposés sur le circuit imprimé 60 comme les logements du support 30.

Le circuit imprimé 60 comporte à sa périphérie une encoche 63 destinée à recevoir une dent 66 du support 30.

La fixation du circuit imprimé 60 sur le support 30 peut s'effectuer au moyen d'une vis 67, comme illustré figure 2.

Le circuit imprimé 60 peut également supporter un circuit électronique de mise en forme des signaux délivrés par les sondes 40ᵤ, 40ᵥ et 40_{w} et, le cas échéant, de traitement de ces signaux.

Le traitement des signaux émis par les sondes peut s'effectuer en tenant compte du fait, que selon la polarité de la machine, les sondes situées dans certains logements du support peuvent correspondre à des phases différentes.

Pour monter le dispositif de détection 12, le support 30 est fixé dans le flasque 6 de la machine, sans serrage des vis 33. Ensuite, on peut alimenter les phases du stator de telle façon que le rotor se trouve en face de la phase U du stator. On peut alors faire tourner le support 30 relativement au stator pour avoir la sonde 40ᵤ en face d'un pôle correspondant de la roue polaire 14, en s'aidant des repères 20. Le support 30 peut ensuite être bloqué en position en serrant les vis 33.

Bien entendu, l'invention n'est pas limitée à l'exemple illustré.

La machine peut être un générateur.

Le dispositif de détection 10 peut être monté du côté intérieur d'un flasque de la machine.

Le traitement des signaux émis par les sondes peut être effectué dans un variateur pilotant la machine et non dans un circuit électronique associé au circuit imprimé ou, en variante, partiellement dans un tel circuit électronique et partiellement dans le variateur.

L'entrefer entre la roue polaire et les sondes peut être axial, dans une variante non illustrée.

La machine peut comporter un nombre de phases différent de trois.

Les sondes à effet Hall peuvent être remplacées par d'autres capteurs magnétiques, par exemple à induction.

L'expression « comportant un » doit être comprise comme étant synonyme de « comportant au moins un », sauf si le contraire est spécifié.

## Revendications

1. Machine électrique tournante polyphasée (1) comportant :
- un rotor (3),
- un stator (2) ayant une pluralité de phases disposées circonférentiellement avec un premier écart angulaire (β) entre deux phases,
- une pluralité de capteurs magnétiques, notamment de sondes à effet Hall, associées au stator, au moins deux capteurs adjacents étant espacés angulairement d'un deuxième intervalle angulaire (α) supérieur ou égal au premier,
- un dispositif magnétique associé au rotor, comportant autant de pôles que ce dernier et interagissant magnétiquement avec les capteurs magnétiques.

2. Machine électrique tournante triphasée (1) comportant :
- un rotor (3) à aimants permanents,
- un stator (2) ayant une pluralité de phases disposées circonférentiellement avec un premier écart angulaire (β) entre deux phases,
- trois capteurs magnétiques respectivement associés aux trois phases U, V et W de la machine, notamment trois sondes à effet Hall, associés au stator, au moins deux capteurs adjacents étant espacés angulairement d'un deuxième intervalle angulaire (α) supérieur ou égal au premier.

3. Machine selon la revendication 2, comportant un dispositif magnétique (11) associé au rotor et interagissant magnétiquement avec les capteurs magnétiques.

4. Machine selon la revendication précédente, le dispositif magnétique comportant autant de pôles que le rotor.

5. Machine selon l'une quelconque des revendications précédentes, le dispositif magnétique (11) comportant une roue polaire (14).

6. Machine selon la revendication 5, dans laquelle la roue polaire est fixée sur une entretoise portée par l'arbre du rotor.

7. Machine selon l'une quelconque des revendications 1 et 3 à 6, le dispositif magnétique comportant au moins un repère (20) matérialisant l'emplacement d'un pôle ou d'une frontière entre pôles.

8. Machine selon la revendication précédente, le dispositif magnétique comportant autant de repères (20) que de pôles.

9. Machine selon l'une quelconque des revendications précédentes, le rotor comportant quatre pôles, le premier écart angulaire (β) étant sensiblement de 60° et le deuxième écart angulaire (α) sensiblement de 120°.

10. Machine selon l'une quelconque des revendications 1 à 8, le rotor comportant six pôles, le premier écart angulaire (β) étant sensiblement de 40° et le deuxième écart angulaire (α) étant sensiblement de 40°.

11. Machine selon l'une quelconque des revendications 1 à 8, le rotor comportant huit pôles, le premier écart angulaire (β) étant sensiblement de 30° et le deuxième écart angulaire (α) étant sensiblement de 120°.

12. Machine selon l'une quelconque des revendications 1 à 8, le rotor comportant douze pôles, le premier écart angulaire (β) étant sensiblement de 20° et le deuxième écart angulaire (α) sensiblement de 40°.

13. Machine selon l'une quelconque des revendications précédentes, dans laquelle les capteurs magnétiques (40ᵤ, 40ᵥ, 40_{w}) sont disposés sur un support (30) rapporté sur le stator.

14. Machine selon la revendication précédente, dans laquelle le support comporte des reliefs (51, 52, 53, 54, 55) de positionnement des capteurs magnétiques, chaque relief permettant le positionnement d'un capteur dans une position angulaire prédéfinie sur le support, le nombre de positions angulaires prédéfinies étant supérieur au nombre de capteurs.

15. Machine selon la revendication précédente, dans laquelle les reliefs sont des logements.

16. Machine selon la revendication précédente, dans laquelle les logements sont formés en creux sur une surface radialement intérieure du support.

17. Machine selon l'une quelconque des revendications 13à 16 comportant un circuit imprimé (60) associé au support, présentant des pistes conductrices aboutissant à une pluralité de groupements de pastilles de connexion, chaque groupement comportant au moins autant de pastilles que le capteur magnétique comporte de pattes de raccordement au circuit imprimé, le nombre de groupements étant supérieur à celui des capteurs magnétiques, chaque groupement étant associé à un relief de positionnement des capteurs sur le support.

18. Machine selon la revendication 1, le rotor étant à aimants permanents.

19. Machine selon l'une quelconque des revendications précédentes, la machine étant un moteur capable de fonctionner avec une température de bobinage supérieure à 130 °C.

20. Machine selon l'une quelconque des revendications précédentes, les capteurs magnétiques étant des sondes à effet Hall.

21. Machine selon l'une des revendications 1 et 2, le deuxième intervalle angulaire (α) étant strictement supérieur au premier intervalle angulaire (β).
